# FASCICULE DE BREVET EUROPEEN

(11) **EP 3 999 421 B1**
(45) Date de publication et mention de la délivrance du brevet: **29.11.2023**
(21) Numéro de dépôt: 20737458.8
(22) Date de dépôt: 08.07.2020
(51) Int. Cl.: B64D 11/06

(54) **ARRANGEMENTS DE SIÈGES, NOTAMMENT POUR UNE CABINE D'AVION**
SITZANORDNUNGEN, INSBESONDERE FÜR EINE FLUGZEUGKABINE
SEATING ARRANGEMENTS, ESPECIALLY FOR AN AIRCRAFT CABIN

(30) Priorité: 18.07.2019 FR 1908144
(43) Date de publication de la demande: 25.05.2022
(73) Titulaire: Safran Seats, 78370 Plaisir (FR)
(72) Inventeur: LAYET, Julien, 77550 MOISSY-CRAMAYEL (FR); FOSSET, Julien, 77550 MOISSY-CRAMAYEL (FR)
(74) Mandataire: Marconnet, Sébastien
(86) Numéro de dépôt international: PCT/EP2020/069283
(87) Numéro de publication internationale: WO 2021/008974

(56) Documents cités:
- EP-A1- 3 225 551
- WO-A1-2012/140515
- WO-A1-2018/033599
- WO-A1-2018/184778
- FR-A1- 3 059 951
- US-A1- 2013 160 240
- US-A1- 2013 241 247

## Description

La présente invention porte sur un arrangement de sièges, notamment pour une cabine d'avion.

Les sièges de type "classe affaires" et "première classe" offrent aux passagers différentes positions de confort, d'une position "assise" jusqu'à une position "allongée", dans laquelle le siège définit un plan de couchage sensiblement horizontal pour que le passager puisse s'allonger.

Des positions intermédiaires de confort sont aussi proposées, telles que la position "relax" dans laquelle un dossier du siège est fortement incliné. Généralement, ces positions intermédiaires sont obtenues par l'inclinaison du dossier pivotant autour d'un axe horizontal et perpendiculaire à un axe d'extension du siège. Le passager peut alors rester sur le siège lors de transitions entre les différentes positions.

Le siège est généralement constitué notamment du dossier et d'une assise et est susceptible de comprendre un repose-jambes et/ou un repose-pieds, pouvant être fixes ou liés à une cinématique du siège.

Les agencements de sièges pour cabine d'avion de type "classe affaires" et "première classe" comprennent un passage, disposé entre deux unités de sièges agencées l'une derrière l'autre selon un axe longitudinal de la cabine de l'avion, permettant un accès direct à un couloir de circulation pour tous les passagers. Les passagers peuvent ainsi accéder facilement au couloir de circulation, notamment lorsque le siège est en position allongée.

De ce fait, lorsqu'un passager ou un personnel de bord marche dans le couloir de circulation situé latéralement par rapport au siège, il est susceptible d'être en contact visuel direct avec le passager assis dans le siège. Une telle situation peut apporter un sentiment d'inconfort pour le passager assis, en ce sens qu'il ressent une absence d'intimité.

Le document US2018/0281963 décrit un dispositif de fermeture d'un passage entre deux unités de sièges agencées l'une derrière l'autre. Ce dispositif de fermeture comporte une porte montée coulissante entre une position stockée, dans laquelle la porte laisse le passage dégagé, et une position déployée, dans laquelle la porte obture le passage. Une telle configuration permet de définir un espace intérieur clos autour du siège procurant un sentiment d'intimité au passager. Une telle configuration selon l'état de la technique permet au passager assis sur le siège d'éviter d'être à la vue directe des autres passagers et/ou personnels de bord marchant dans le couloir de circulation. Les documents EP3225548 et GB2548901 décrivent un dispositif de fermeture analogue. Le document WO2012/140515 décrit un arrangement de sièges comportant une colonne de sièges situés côté couloir et une colonne de sièges situés du côté opposé au couloir. Les sièges sont associés chacun à une console. En outre, les sièges des deux colonnes sont disposés en quinconce les uns par rapport aux autres. Le document FR3059951 enseigne la réalisation de portes mobiles permettant d'abriter le passager du regard d'une personne située dans le couloir tout en permettant l'accès au siège depuis le couloir. La configuration des sièges est symétrique. Le document WO2018/184778 décrit un dispositif de fermeture, notamment pour obturer un passage formé dans une cabine d'aéronef, comprenant un moyen de support apte à coulisser le long d'une glissière dans un sens de coulissement, une paroi de fermeture apte à obturer le passage, et un système de verrouillage apte à prendre un état verrouillé dans lequel le système de verrouillage assure une liaison mécanique entre la paroi de fermeture et les moyens de support de sorte que la paroi de fermeture est mobile avec les moyens de support dans la direction de coulissement, et un état déverrouillé dans lequel la paroi de fermeture est désolidarisée des moyens de support, de sorte que la paroi de fermeture (46) est mobile seule en coulissement sens. Le document US2013/241247 décrit une suite de passagers d'avion comprenant un siège configuré pour se déplacer entre une position relevée et une position lit horizontale, un ottoman positionné à l'écart du siège passager, et au moins un ensemble d'accoudoir mobile suivant une direction verticale.

Toutefois, l'intégration de telles portes n'est pas aisée dans une configuration de sièges à au moins deux colonnes dans lesquelles les sièges sont disposés en quinconce. En effet, certains passages d'accès à un siège de la colonne la plus éloignée du couloir de circulation ne permettent pas d'intégrer une porte classique s'étendant quasiment suivant toute la hauteur du module de siège, car du fait de la faible longueur du passage, il est difficile de respecter les contraintes de sécurité imposées par les normes aéronautiques.

L'invention vise à remédier efficacement à cet inconvénient en proposant un arrangement de sièges, notamment pour une cabine d'un avion tel que décrit dans la revendication 1.

L'invention permet ainsi de garantir l'intimité des passagers dans une configuration de sièges arrangés en quinconce suivant deux colonnes, tout en respectant les réglementations de sécurité du fait de l'espace inférieur laissé libre entre la console et le siège avant autorisant une évacuation en cas d'urgence.

Selon une réalisation, l'espace inférieur laissé libre présente une longueur d'au moins 9 pouces (22.86cm).

Selon une réalisation, l'espace inférieur laissé libre présente une hauteur comprise entre 25 pouces (63.50cm) et 30 pouces (76.20cm).

Selon une réalisation, la porte et l'espace supérieur présentent une longueur comprise entre 15 pouces (38.1 0cm) et 20 pouces (50.80cm).

Selon une réalisation, la porte et l'espace supérieur présentent une hauteur comprise entre 14 pouces (35.56cm) et 20 pouces (50.80cm).

Selon une réalisation, notamment à une extrémité d'une colonne de sièges un espace prémium comporte un espace lit et/ou un espace d'assise augmenté et/ou un espace cinéma.

Selon une réalisation, la porte est disposée entre une portion d'une coque et un support fixe portant une glissière de guidage, une crémaillère, des composants d'un système de déploiement automatique, ainsi que des composants d'un système de verrouillage et de déverrouillage de la porte.

Selon une réalisation, la porte comporte un chariot monté mobile en translation suivant une glissière de guidage pour permettre à la porte de passer d'une position à une autre.

Selon une réalisation, l'arrangement comporte un système de verrouillage et de déverrouillage de la porte par rapport au chariot.

Selon une réalisation, la porte comprend un deuxième chariot muni d'un pignon d'amortissement pour amortir un déplacement de la porte destiné à coopérer avec une crémaillère.

Selon une réalisation, le deuxième chariot comporte un système de verrouillage et de déverrouillage apte à prendre un état verrouillé dans lequel ledit système assure un maintien du deuxième chariot dans une position haute de sorte que des dents du pignon d'amortissement coopèrent avec la crémaillère, et un état déverrouillé autorisant un déplacement dudit deuxième chariot vers une position basse de sorte que les dents du pignon d'amortissement sont dégagées de la crémaillère.

Selon une réalisation, ledit arrangement comporte un dispositif de commande, notamment à câbles, apte à commander un changement d'état d'au moins un système de verrouillage et de déverrouillage.

Selon une réalisation, ledit arrangement comporte un système de blocage de la porte dans la position stockée actionnable par un personnel de bord.

Selon une réalisation, ledit arrangement comporte un système de déploiement automatique de la porte d'une position stockée vers une position déployée.

L'invention a également pour objet un avion comportant un arrangement de sièges tel que précédemment défini.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue de dessus d'un arrangement de sièges selon la présente invention;
[Fig. 2] La figure 2 est une vue de dessus d'une cabine d'avion intégrant un arrangement de sièges selon la présente invention;
[Fig. 3] La figure 3 est vue de côté illustrant les deux types de portes pouvant être utilisés dans l'arrangement de sièges selon l'invention;
[Fig. 4] La figure 4 est une vue de côté montrant une petite porte d'accès vers un siège de la colonne la plus éloignée du couloir en position stockée;
[Fig. 5] La figure 5 est une vue de côté montrant une grande porte d'accès vers un siège de la colonne la plus proche du couloir en position stockée;
[Fig. 6] La figure 6 est une vue en perspective d'un siège de la colonne la plus éloignée du couloir de circulation en position allongée;
[Fig. 7] La figure 7 est une vue en perspective illustrant l'intégration d'une porte et de son mécanisme de fonctionnement entre une coque et son support;
[Fig. 8] La figure 8 est une vue en perspective détaillée d'un chariot de guidage de la porte selon l'invention;
[Fig. 9] La figure 9 est une vue en perspective du système de verrouillage et de déverrouillage du chariot de guidage de la porte selon l'invention;
[Fig. 10] La figure 10 montre une vue en perspective du chariot supérieur de la porte selon l'invention muni d'un pignon d'amortissement coopérant avec une crémaillère;
[Fig. 11a] [Fig. 11b] Les figures 11a et 11b montrent une vue en perspective d'un système de blocage de la porte selon l'invention respectivement en position libérée et en position de blocage;
[Fig. 12] La figure 12 montre une vue de côté d'un système de déploiement automatique d'une porte de fermeture d'un espace selon l'invention.

II est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

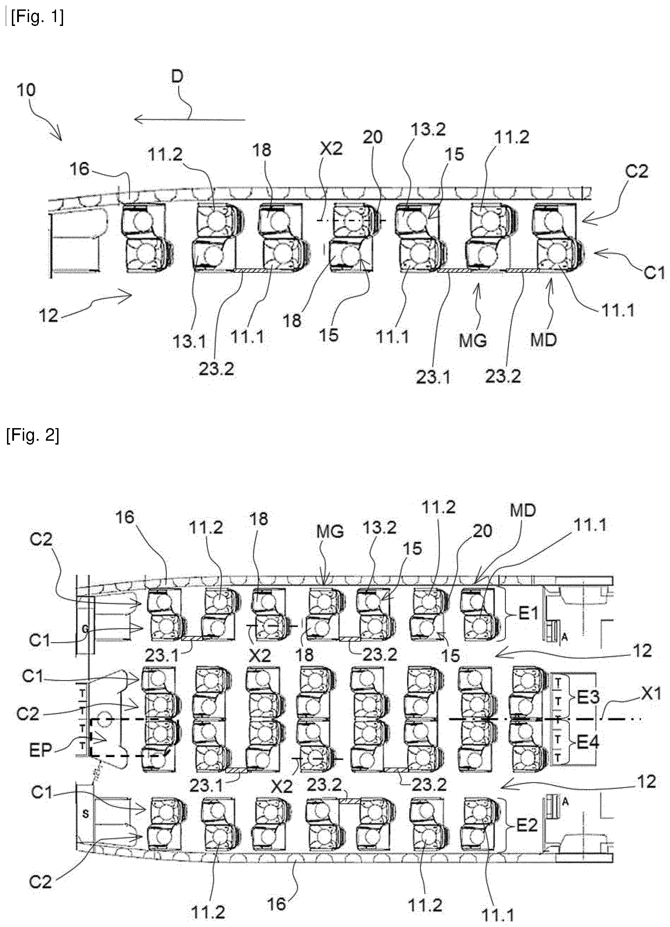

La figure 1 montre un arrangement de sièges 10, notamment pour une cabine d'un avion, comportant au moins une première colonne C1 de sièges 11.1 s'étendant du côté d'un couloir de circulation 12. La première colonne C1 comprend des sièges 11.1 disposés les uns derrière les autres en alternance avec des consoles 13.1. Une console 13.1 est munie d'une zone de pieds 15 destinée à recevoir les pieds d'un passager 14 d'un siège 11.1 arrière correspondant de la première colonne C1.

Au moins une deuxième colonne C2 de sièges 11.2 s'étend d'un côté opposé du couloir de circulation 12. La deuxième colonne C2 comprend des sièges 11.2 disposés les uns derrière les autres en alternance avec des consoles 13.2. Une console 13.2 est munie d'une zone de pieds 15 destinée à recevoir les pieds d'un passager 14 d'un siège 11.2 arrière correspondant de la deuxième colonne C2.

Les sièges 11.1 de la première colonne C1 et les sièges 11.2 de la deuxième colonne C2 sont tournés dans une même direction D qui pourra correspondre à la direction de mouvement de l'avion. En variante, la direction d'orientation des sièges 11.1, 11.2 pourra correspondre à une direction opposée à celle du mouvement de l'avion, ou toute autre direction.

Une colonne de sièges C1, C2 s'étend longitudinalement à l'intérieur de l'avion. Une colonne de sièges C1, C2 peut s'étendre suivant un axe longitudinal de la cabine d'avion X1 ou suivant un axe parallèle à l'axe longitudinal de la cabine d'avion X1, tel que montré sur la figure 2.

II est à noter que, dans la suite de la description, les termes "avant" et "arrière" employés en relation avec le terme "siège" ou "console" définissent localement une position relative du siège ou de la console à l'intérieur d'une colonne C1, C2 et ne se réfèrent aucunement à une orientation du siège ou de la console à l'intérieur de la cabine d'avion. En d'autres termes, l'expression "siège avant" signifie que le siège avant est positionné directement devant un autre siège à l'intérieur de la colonne C1, C2, tandis que l'expression "siège arrière" signifie que le siège est positionné directement derrière un autre siège à l'intérieur de la colonne C1, C2.

A l'intérieur d'une colonne, chaque siège 11.1, 11.2 présente un axe X2 qui pourra être parallèle à l'axe longitudinal de la cabine d'avion X1. Alternativement, l'axe X2 d'un siège 11.1, 11.2 pourra former un angle, par exemple compris entre 0 et 20 degrés, par rapport à l'axe longitudinal de la cabine d'avion X1. L'axe X2 d'un siège 11.1, 11.2 correspond à une intersection entre un plan de symétrie vertical du siège 11.1, 11.2 et un plan horizontal correspondant.

La colonne C1 de l'arrangement de sièges 10 pourra être disposée du côté du couloir 12, tandis que la deuxième colonne C2 pourra être disposée du côté du fuselage 16. Ainsi, dans l'arrangement de la figure 2, on distingue un premier ensemble E1 de deux colonnes de sièges C1, C2 et un deuxième ensemble E2 de deux colonnes de sièges C1, C2 symétriques par rapport à l'axe longitudinal de la cabine d'avion X1. Chaque ensemble E1, E2 présente une colonne de sièges C2 disposée du côté du fuselage 16. On distingue également deux ensembles centraux E3, E4 de deux colonnes C1, C2 symétriques par rapport à l'axe longitudinal de la cabine d'avion X1.

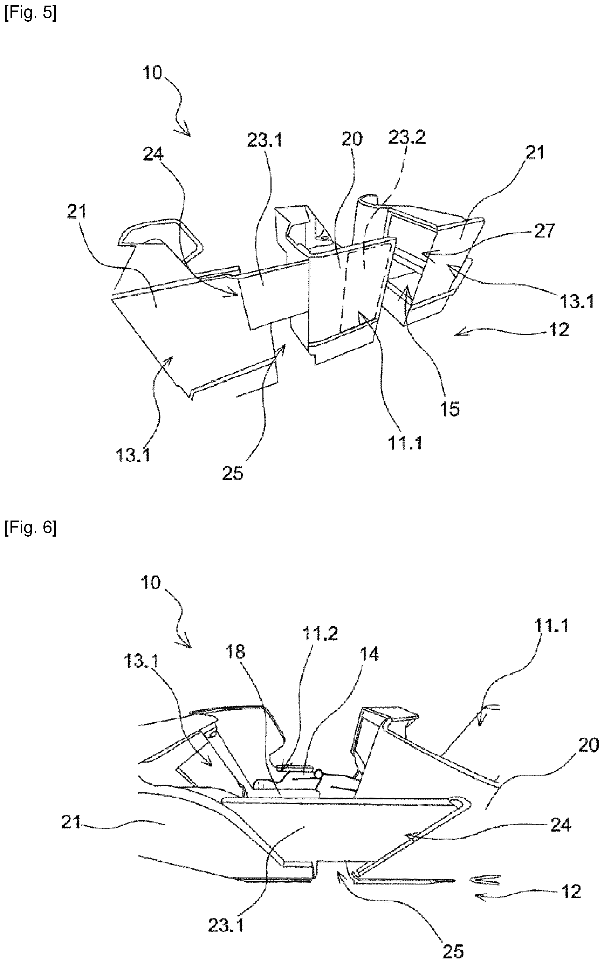

Un siège 11.1, 11.2 est convertible entre une position "assise", correspondant à la position utilisée notamment lors des phases d'arrêt, de décollage, et d'atterrissage de l'avion, et une position "allongée", dans laquelle le siège 11.1, 11.2 définit un plan sensiblement horizontal pour le passager 14 afin de lui permettre de se reposer, tel que montré sur la figure 6. En particulier, la position "assise" et la position "allongée" constituent des configurations du siège 11.1, 11.2 dans deux positions extrêmes. Selon des variantes de réalisation, le siège 11.1, 11.2 pourra également prendre des positions intermédiaires, dites positions relax, entre ces deux positions extrêmes.

Les sièges 11.2 de la deuxième colonne C2 sont disposés en quinconce par rapport aux sièges 11.1 de la première colonne C1, c'est-à-dire que les sièges 11.1, 11.2 ne sont pas alignés latéralement d'une colonne par rapport à l'autre.

Dans chaque colonne de sièges C1, C2, un console 13.1, 13.2 est munie d'une zone de pieds 15 destinée à recevoir les pieds d'un passager 14 d'un siège 11.1, 11.2 arrière correspondant, notamment lorsque le siège 11.1, 11.2 est en position allongée. Ainsi, l'ouverture de la zone de pieds 15 est dirigée vers le siège 11.1, 11.2 situé immédiatement derrière la console 13.1, 13.2 correspondante.

Une console donnée 13.1, 13.2 est disposée à proximité d'un siège 11.1, 11.2 de l'autre colonne pour définir un espace pour ranger et/ou poser des objets. Une console 13.1, 13.2 présente à cet effet une paroi supérieure plane 18 sur laquelle le passager 14 du siège 11.1, 11.2 adjacent pourra notamment poser des objets. La paroi supérieure 18 pourra ainsi servir de table, de surface de travail, de table de repas, de table de cocktail ou de toute autre surface utilisable pour un passager 14 assis dans le siège 11.1, 11.2 adjacent de l'autre colonne. La console 13.1, 13.2 pourra également comporter des espaces de rangement de type porte-magazine, tiroirs, ou autre.

Une console 13.1, 13.2 et un siège 11.1, 11.2 adjacent de l'autre colonne pourront former un module de siège MD, MG. On distingue un module de siège droit MD dans lequel la console 13.2 est disposée à droite du siège 11.1 correspondant et un module de siège gauche MG dans lequel la console 13.1 est disposée à gauche du siège 11.2 correspondant. Il est ainsi possible de former l'ensemble de deux colonnes C1, C2 en disposant alternativement un module droit MD et un module gauche MG les uns derrière les autres.

Un siège 11.1, 11.2 est associé à une coque d'intimité 20 pour le passager 14. Une console 13.1, 13.2 est également associée à une coque d'intimité 21. Les coques 20 et 21 d'un siège 11.1, 11.2 et d'une console 13.1, 13.2 d'un même module MD, MG pourront être réalisées d'un seul tenant.

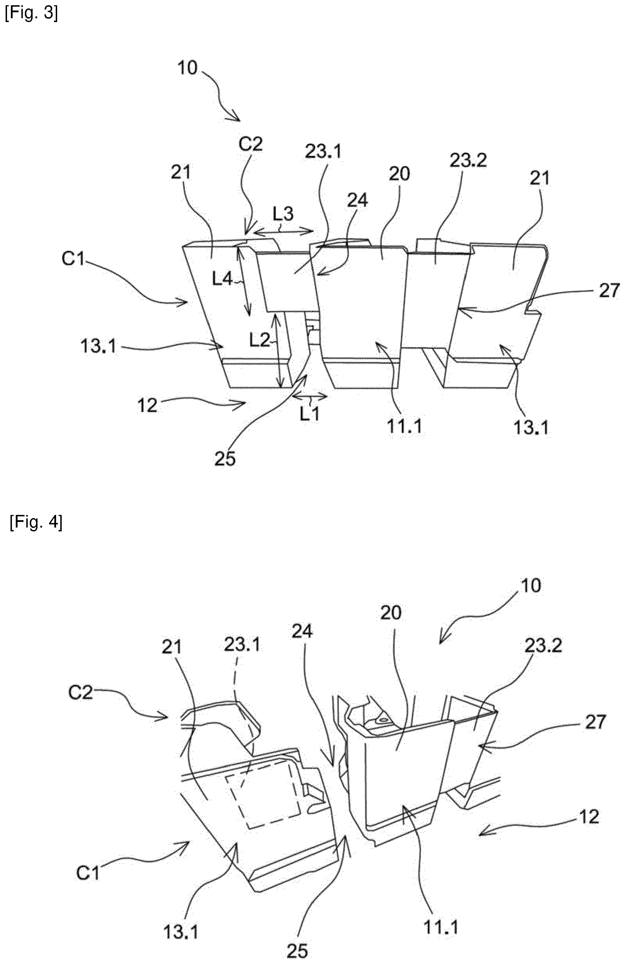

Comme on peut le voir sur les figures 3, 4, 5, et 6, au moins une porte 23.1 est mobile entre une position stockée et une position déployée dans laquelle la porte 23.1 obture un espace supérieur 24 situé au-dessus d'une console 13.1 de la première colonne C1. Cet espace supérieur 24 est délimité d'une part par la coque 21 associée à la console 13 et d'autre part par la coque 20 associée au siège 11.1 avant.

Un espace inférieur 25 s'étendant entre l'extrémité avant de la console 13.1 et une coque 20 du siège 11.1 avant est laissé libre, c'est-à-dire que cet espace inférieur 25 est dépourvu de porte. L'espace inférieur 25 est de préférence laissé libre suivant toute la hauteur de la console 13.1. L'espace inférieur 25 est plus étroit que l'espace supérieur 24. L'espace inférieur 25 est en communication avec l'espace supérieur 24 pour former un passage d'accès entre le couloir de circulation 12 et un siège 11.2 de la deuxième colonne C2 lorsque la porte 23.1 est en position stockée.

Ainsi, la porte 23.1 est disposée dans l'espace libre situé au-dessus de la console 13.1, en particulier au-dessus d'une surface de la console 13.1 formant une table. Cela permet de faciliter l'intégration de la porte 23.1 qui sinon réduirait, du fait de son épaisseur, la largeur disponible du siège 11.2 et/ou de la console 13.1. En outre, cela permet de maximiser l'espace situé sous la première porte 23.1 associée à un siège 11.2 éloigné du couloir de circulation 12 pour une évacuation en cas d'urgence. Un passager pouvant ainsi passer aisément sous une porte 12.1, il n'est pas nécessaire d'effectuer un test d'évacuation pour les portes 12.1.

Suivant un exemple de réalisation, l'espace inférieur 25 laissé libre présente une longueur L1 d'au moins 9 pouces (22.86cm), et une hauteur L2 comprise entre 25 pouces (63.50cm) et 30 pouces (76.20cm). La porte 23.1 et l'espace supérieur 24 présentent une longueur L3 comprise entre 15 pouces (38.10cm) et 20 pouces (50.80cm) et une hauteur L4 comprise entre 14 pouces (35.56cm) et 20 pouces (50.80cm).

En outre, au moins une deuxième porte 23.2 est mobile entre une position stockée et une position déployée dans laquelle la porte 23.2 obture un espace 27 s'étendant entre une coque 20 d'un siège 11.1 et une extrémité arrière d'une console 13.1 de la première colonne C1. Cet espace 27 forme un passage d'accès entre le couloir de circulation 12 et un siège 11.1 de la première colonne C1, lorsque la porte 23.2 est en position stockée.

La première porte 23.1 est plus petite que la deuxième porte 23.2. En particulier, la première porte 23.1 présente une hauteur L4 mesurée suivant une direction verticale inférieure à la hauteur de la deuxième porte 23.2.

Lorsqu'une porte 23.1, 23.2 est en position déployée, le passage d'accès correspondant entre le couloir de circulation 12 et un siège 11.1 de la première colonne C1 ou un siège 11.2 de la deuxième colonne C2 est clos par la porte 23.1, 23.2. En conséquence, le passager 14 assis dans le siège 11 est séparé de tout passager et/ou personnel de bord marchant dans le couloir de circulation 12 par la porte 23.1, 23.2 et les coques d'intimité 20 et 21. Le passager 14 se retrouve assis dans une zone d'intimité définie par l'espace clos ainsi créé.

Certains espaces entre des consoles 13.1 et des sièges 11.1 de la première colonne C1 pourront toutefois être dépourvus de porte 23.1, 23.2. Cela pourra notamment être le cas pour les sièges 11.1, 11.2 de gamme inférieure à ceux associés à une porte de fermeture 23.1, 23.2.

Par ailleurs, un espace prémium EP pourra être prévu, notamment à une extrémité d'une colonne de sièges C1, C2. Cet espace prémium EP pourra comporter un espace lit et/ou un espace d'assise augmenté et/ou un espace cinéma.

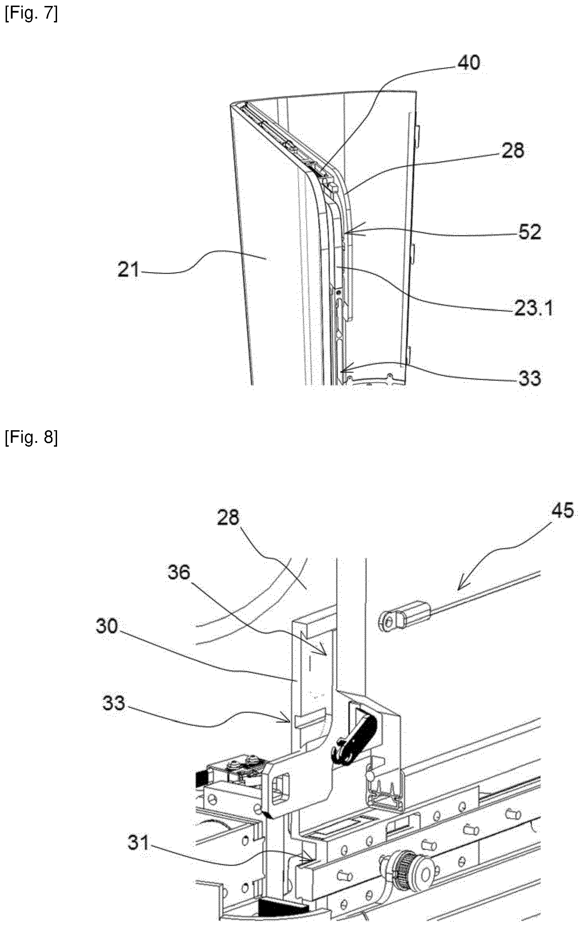

Comme cela est montré sur la figure 7, une porte 23.1 est disposée entre une portion d'une coque 21 et un support fixe 28 portant une glissière de guidage 31, une crémaillère 40, des composants d'un système de déploiement automatique 52, ainsi que des composants d'un système de verrouillage et de déverrouillage 33 de la porte 23.1 décrits plus en détails ci-après.

Comme on peut le voir sur la figure 8, une porte 23.1, 23.2 comporte un chariot 30 monté mobile en translation suivant une glissière de guidage 31 pour permettre à la porte 23.1, 23.2 de passer de la position stockée à la position déployée et inversement.

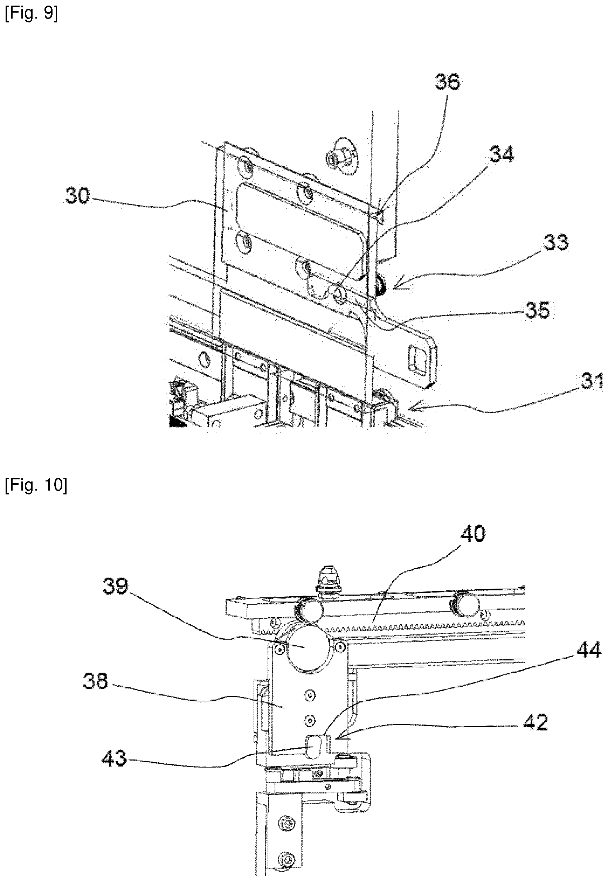

Un système 33 permet de verrouiller et de déverrouiller en cas de besoin la porte 23.1, 23.2 par rapport au chariot 30. Suivant un exemple de réalisation, le système de verrouillage et de déverrouillage 33 comporte une came 34 rotative montée sur la porte 23.1, 23.2, tel que cela est montré sur la figure 9. La came 34 est mobile en rotation entre une position de verrouillage dans laquelle la came 34 vient en butée contre une extrémité d'une rainure de dégagement 35 et une position de déverrouillage dans laquelle l'axe de la came 34 s'aligne avec la rainure 35, de façon à pouvoir glisser à l'intérieur de la rainure 35. Cela permet d'assurer un déplacement relatif de la porte 23.1, 23.2 par rapport au chariot 30.

Un système de coulissement 36, par exemple à nervure et rainure correspondante, pourra permettre de faciliter le déplacement de la porte 23.1, 23.2 par rapport au chariot 30 pour assurer le dégagement du passage d'accès.

Comme cela est illustré par la figure 10, la porte 23.1, 23.2 comprend un deuxième chariot 38 muni d'un pignon d'amortissement 39 pour amortir un déplacement de la porte 23.1, 23.2 destiné à coopérer avec une crémaillère 40 montée sur le support fixe 28. Le pignon d'amortissement 39 pourra prendre la forme d'un pignon à friction de type connu.

Le deuxième chariot 38 comporte un deuxième système 42 de verrouillage et de déverrouillage du deuxième chariot 38 apte à prendre un état verrouillé dans lequel ledit système 42 assure un maintien du deuxième chariot 38 dans une position haute de sorte que des dents du pignon d'amortissement 39 coopèrent avec la crémaillère 40, et un état déverrouillé autorisant un déplacement dudit deuxième chariot 38 vers une position basse de sorte que les dents du pignon d'amortissement 39 sont dégagées de la crémaillère 40. Le système 42 pourra par exemple comporter une came 43 dont le déplacement par rapport à une échancrure 44 permet de passer d'une position à une autre.

Un dispositif de commande 45, notamment à câbles, est apte à commander un changement d'état d'au moins un système de verrouillage et de déverrouillage 33, 42 via un déplacement d'au moins une came 34, 43 du système correspondant. La commande du déplacement de la came 34, 43 pourra être effectuée notamment par actionnement d'un organe de déverrouillage, tel qu'un bouton ou un levier, intégré sur un côté de la porte 23.1, 23.2.

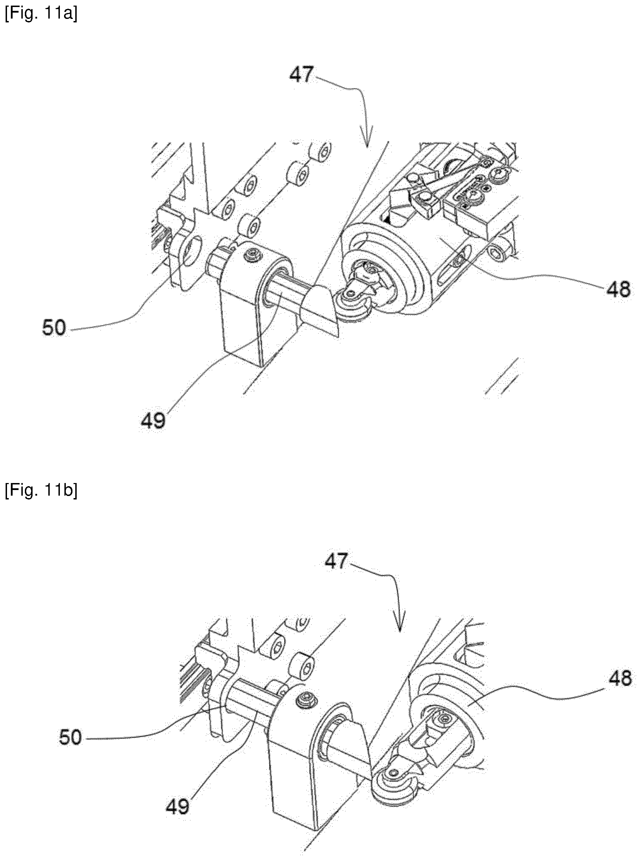

Par ailleurs, comme cela est montré sur les figures 11a et 11b, un système de blocage 47 permet de bloquer la porte 23.1, 23.2 dans la position stockée. Ce système de blocage 47 est destiné à être utilisé par le personnel de bord afin de s'assurer notamment que la porte 23.1, 23.2 est en position stockée lorsque le siège 11.1, 11.2 est en position TTL (Taxi, Take-off, Landing) prise lors des phases d'arrêt, de décollage, et d'atterrissage de l'avion.

Le système de blocage 47 comporte un actionneur électrique linéaire 48 apte à déplacer une tige 49 en translation entre une position libérée dans laquelle la tige 49 est dégagée d'un logement 50 correspondant ménagé dans une portion du premier chariot 30 (cf. figure 11a) et une position de blocage dans laquelle la tige 49 pénètre à l'intérieur du logement 50 du chariot 30 pour empêcher un déplacement de la porte 23.1, 23.2 (cf. figure 11b), en conditions normales de fonctionnement.

Les actionneurs électriques 48 pourront être pilotés par un système centralisé permettant au personnel de bord de bloquer en position stockée l'ensemble des portes 23.1, 23.2, en une seule opération de commande.

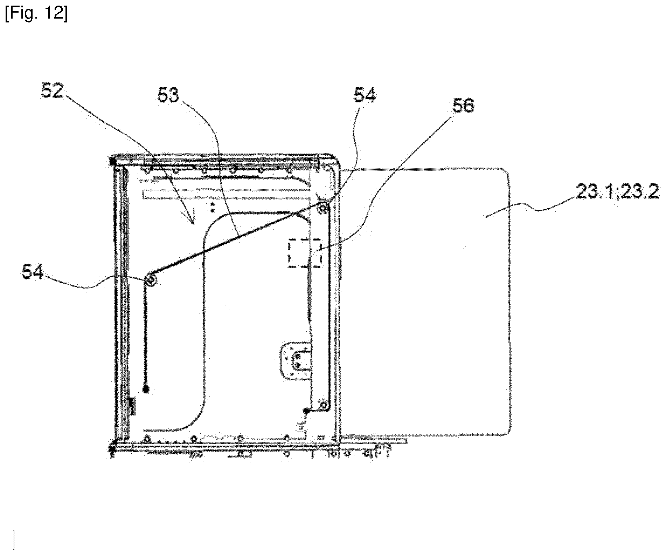

Avantageusement, on prévoit un système de déploiement automatique 52 de la porte 23.1, 23.2 montré sur la figure 12. Le système de déploiement automatique 52 comporte une sangle 53 élastique ainsi qu'une pluralité de moyens de guidage 54 de la sangle 53, tels que des poulies, disposés entre une première extrémité de ladite sangle 53 fixée sur la porte 23.1, 23.2 et une deuxième extrémité de ladite sangle 53 fixée sur le support fixe 28. Une action de la part du passager 14 sur un bouton de commande 56 disposé du côté du siège 11.1, 11.2 permet de libérer la sangle 53 et de faire passer automatiquement la porte 23.1, 23.2 dans la position déployée.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

Bien évidemment, l'invention n'est pas limitée aux modes de réalisation décrits précédemment et fournis uniquement à titre d'exemple. Elle englobe diverses modifications, et autres variantes que pourra envisager l'homme du métier dans le cadre de la présente invention, telle que définie par les revendications ci-jointes.

## Revendications

1. Arrangement de sièges (10), notamment pour une cabine d'un avion, comportant:
- au moins une première colonne de sièges (C1) s'étendant d'un côté d'un couloir de circulation (12) comprenant des sièges (11.1) disposés les uns derrière les autres en alternance avec des consoles (13.1), une console (13.1) étant munie d'une zone de pieds (15) destinée à recevoir des pieds d'un passager d'un siège (11.1) arrière correspondant de la première colonne (C1),
- au moins une deuxième colonne de sièges (C2) s'étendant d'un côté opposé au couloir de circulation (12) comprenant des sièges (11.2) disposés les uns derrière les autres en alternance avec des consoles (13.2), une console (13.2) étant munie d'une zone de pieds (15) destinée à recevoir des pieds d'un passager d'un siège (11.2) arrière correspondant de la deuxième colonne (C2),
- les sièges (11.2) de la deuxième colonne (C2) étant disposés en quinconce par rapport aux sièges (11.1) de la première colonne (C1),
**caractérisé en ce que** ledit arrangement (10) comporte au moins une première porte (23.1) mobile entre une position stockée et une position déployée dans laquelle la première porte (23.1) obture un espace supérieur (24) situé au-dessus d'une console (13.1) de la première colonne (C1), ledit espace supérieur (24) étant délimité d'une part par une coque (21) associée à ladite console (13.1) et d'autre part par une coque (20) associée à un siège (11.1) avant,
- un espace inférieur (25) s'étendant entre une extrémité avant de la console (13.1) et la coque (20) du siège (11.1) avant étant laissé libre,
- l'espace inférieur (25) étant en communication avec l'espace supérieur (24) pour former un passage d'accès entre le couloir et un siège (11.2) de la deuxième colonne (C2) lorsque la première porte (23.1) est en position stockée,
- et **en ce que** ledit arrangement de sièges (10) comporte au moins une deuxième porte (23.2) mobile entre une position stockée et une position déployée dans laquelle la porte (23.2) obture un espace s'étendant entre une coque (20) d'un siège (11.1) et une extrémité arrière d'une console (13.1) de la première colonne (C1), cet espace formant un passage d'accès entre le couloir de circulation (12) et un siège (11.1) de la première colonne (C1), lorsque la deuxième porte (23.2) est en position stockée,
- la première porte (23.1) étant plus petite que la deuxième porte (23.2).

2. Arrangement de sièges selon la revendication 1, **caractérisé en ce que** l'espace inférieur (25) laissé libre présente une longueur (L1) d'au moins 9 pouces (22.86cm).

3. Arrangement de sièges selon la revendication 1 ou 2, **caractérisé en ce que** l'espace inférieur (25) laissé libre présente une hauteur (L2) comprise entre 25 pouces (63.50cm) et 30 pouces (76.20cm).

4. Arrangement de sièges selon l'une quelconque des revendications 1 à 3, **caractérisé en ce que** la première porte (23.1) et l'espace supérieur (24) présentent une longueur (L3) comprise entre 15 pouces (38.10cm) et 20 pouces (50.80cm).

5. Arrangement de sièges selon l'une quelconque des revendications 1 à 4, **caractérisé en ce que** la première porte (23.1) et l'espace supérieur (24) présentent une hauteur (L4) comprise entre 14 pouces (35.56cm) et 20 pouces (50.80cm).

6. Arrangement de sièges selon l'une quelconque des revendications 1 à 5, **caractérisé en ce qu'**à une extrémité d'une colonne de sièges (C1, C2), un espace prémium (EP) comporte un espace lit et/ou un espace d'assise augmenté et/ou un espace cinéma.

7. Arrangement de sièges selon l'une quelconque des revendications 1 à 6, **caractérisé en ce que** la porte (23.1) est disposée entre une portion d'une coque (21) et un support fixe (28) portant une glissière de guidage (31), une crémaillère (40), des composants d'un système de déploiement automatique (52), ainsi que des composants d'un système (33) de verrouillage et de déverrouillage de la porte.

8. Arrangement de sièges selon l'une quelconque des revendications 1 à 7, **caractérisé en ce que** la porte (23.1) comporte un chariot (30) monté mobile en translation suivant une glissière de guidage (31) pour permettre à la porte (23.1) de passer d'une position à une autre.

9. Arrangement de sièges selon la revendication 8, **caractérisé en ce qu'**il comporte un système (33) de verrouillage et de déverrouillage de la porte (23.1) par rapport au chariot (30).

10. Arrangement de sièges selon l'une quelconque des revendications 8 ou 9, **caractérisé en ce que** la porte (23.1) comprend un deuxième chariot (38) muni d'un pignon d'amortissement (39) pour amortir un déplacement de la porte (23.1) destiné à coopérer avec une crémaillère (40).

11. Arrangement de sièges selon la revendication 10, **caractérisé en ce que** le deuxième chariot (38) comporte un système de verrouillage et de déverrouillage (42) apte à prendre un état verrouillé dans lequel ledit système (42) assure un maintien du deuxième chariot (38) dans une position haute de sorte que des dents du pignon d'amortissement (39) coopèrent avec la crémaillère (40), et un état déverrouillé autorisant un déplacement dudit deuxième chariot (38) vers une position basse de sorte que les dents du pignon d'amortissement (39) sont dégagées de la crémaillère (40).

12. Arrangement de sièges selon la revendication 9 ou 11, **caractérisé en ce qu'**il comporte un dispositif de commande (45), notamment à câbles, apte à commander un changement d'état d'au moins un système de verrouillage et de déverrouillage (33, 42).

13. Arrangement de sièges selon l'une quelconque des revendications 1 à 12, **caractérisé en ce qu'**il comporte un système de blocage (47) de la porte (23.1) dans la position stockée actionnable par un personnel de bord.

14. Arrangement de sièges selon l'une quelconque des revendications 1 à 13, **caractérisé en ce qu'**il comporte un système de déploiement automatique (52) de la porte (23.1) d'une position stockée vers une position déployée.

15. Avion comportant un arrangement de sièges (10) tel que défini selon l'une quelconque des revendications précédentes.

## Patentansprüche

1. Sitzanordnung (10), insbesondere für eine Flugzeugkabine, umfassend:
- mindestens eine erste Sitzsäule (C1), die sich auf einer Seite eines Ganges (12) mit abwechselnd mit Konsolen (13.1) hintereinander angeordneten Sitzen (11.1) erstreckt, wobei eine Konsole (13.1) mit einem Fußbereich (15) zur Aufnahme der Füße eines Passagiers eines entsprechenden Rücksitzes (11.1) der ersten Säule (C1) versehen ist,
- mindestens eine zweite Sitzsäule (C2), die sich auf einer dem Gang (12) gegenüberliegenden Seite mit abwechselnd mit Konsolen (13.2) hintereinander angeordneten Sitzen (11.2) erstreckt, wobei eine Konsole (13.2) mit einem Fußbereich (15) zur Aufnahme der Füße eines Passagiers eines entsprechenden Rücksitzes (11.2) der zweiten Säule (C2) versehen ist,
- wobei die Sitze (11.2) der zweiten Säule (C2) zu den Sitzen (11.1) der ersten Säule (C1) gegeneinander versetzt angeordnet sind,
**dadurch gekennzeichnet, dass** die Anordnung (10) mindestens eine erste Tür (23.1) umfasst, die zwischen einer verstauten Position und einer ausgefahrenen Position, in der die erste Tür (23.1) einen oberen Raum (24) über einer Konsole (13.1) der erste Säule (C1) abschließt, bewegbar ist, wobei der obere Raum (24) einerseits durch eine der Konsole (13.1) zugeordnete Schale (21) und andererseits durch eine einem Vordersitz (11.1) zugeordnet Schale (20) begrenzt ist,
- wobei ein unterer Raum (25), der sich zwischen einem vorderen Ende der Konsole (13.1) und der Schale (20) des Vordersitzes (11.1) erstreckt, freigelassener ist,
- der untere Raum (25) in Verbindung mit dem oberen Raum (24) steht, um einen Zugangsdurchgang zwischen dem Gang und einem Sitz (11.2) der zweiten Säule (C2) zu bilden, wenn sich die erste Tür (23.1) in der verstauten Position befindet,
- und dass die Sitzanordnung (10) mindestens eine zweite Tür (23.2) umfasst, die zwischen einer verstauten Position und einer ausgefahrenen Position, in der die Tür (23.2) einen Raum abschließt, der sich zwischen einer Schale (20) eines Sitzes (11.1) und einem hinteren Ende einer Konsole (13.1) der ersten Säule (C1) erstreckt, bewegbar ist, wobei der Raum einen Zugangsdurchgang zwischen dem Gang (12) und einem Sitz (11.1) der ersten Säule (C1) bildet, wenn sich die zweite Tür (23.2) in der verstauten Position befindet,
- wobei die erste Tür (23.1) kleiner als die zweite Tür (23.2) ist.

2. Sitzanordnung nach Anspruch 1, **dadurch gekennzeichnet, dass** der freigelassene untere Raum (25) eine Länge (L1) von mindestens 9 Zoll (22,86cm) aufweist.

3. Sitzanordnung nach Anspruch 1 oder 2, **dadurch gekennzeichnet, dass** der freigelassene untere Raum (25) eine Höhe (L2) zwischen 25 Zoll (63,50cm) und 30 Zoll (76,20cm) aufweist.

4. Sitzanordnung nach einem der Ansprüche 1 bis 3, **dadurch gekennzeichnet, dass** die erste Tür (23.1) und der obere Raum (24) eine Länge (L3) zwischen 15 Zoll (38,10cm) und 20 Zoll (50,80cm) aufweist.

5. Sitzanordnung nach einem der Ansprüche 1 bis 4, **dadurch gekennzeichnet, dass** die erste Tür (23.1) und der obere Raum (24) eine Höhe (L4) zwischen 14 Zoll (35,56cm) und 20 Zoll (50,80cm) aufweist.

6. Sitzanordnung nach einem der Ansprüche 1 bis 5, **dadurch gekennzeichnet, dass** an einem Ende einer Sitzsäule (C1, C2) ein Premiumraum (EP) einen Bettraum und/oder einen erhöhten sitzenden Raum und/oder ein Kinoraum.

7. Sitzanordnung nach einem der Ansprüche 1 bis 6, **dadurch gekennzeichnet, dass** die Tür (23.1) zwischen einem Abschnitt einer Schale (21) und einem festen Träger (28), der eine Führungsschiene (31), eine Zahnstange (40), Komponenten eines automatischen Ausfahrsystems (52) sowie Komponenten eines Systems (33) zum Verriegeln und Entriegeln der Tür trägt.

8. Sitzanordnung nach einem der Ansprüche 1 bis 7, **dadurch gekennzeichnet, dass** die Tür (23.1) einen Schlitten (30) aufweist, der entlang einer Führungsschiene (31) translatorisch beweglich gelagert ist, um die Bewegung der Tür (23.1) von einer Position in eine andere zu ermöglichen.

9. Sitzanordnung nach Anspruch 8, **dadurch gekennzeichnet, dass** sie ein System (33) zum Verriegeln und Entriegeln der Tür (23.1) relativ zum Schlitten (30) umfasst.

10. Sitzanordnung nach einem der Ansprüche 8 oder 9, **dadurch gekennzeichnet, dass** die Tür (23.1) einen zweiten Schlitten (38) aufweist, der mit einem Dämpfungsritzel (39) zur Dämpfung einer Verschiebung der Tür (23.1) zum Zusammenwirken mit einer Zahnstange (40) versehen ist.

11. Sitzanordnung nach Anspruch 10, **dadurch gekennzeichnet, dass** der zweite Schlitten (38) ein Verriegelungs- und Entriegelungssystem (42) umfasst, das einen verriegelten Zustand, in dem das System (42) den zweiten Schlitten (38) in einer hohen Position hält, so dass die Zähne des Dämpfungsritzels (39) mit der Zahnstange (40) zusammenwirken, und einen entriegelten Zustand, der die Bewegung des zweiten Schlittens (38) in eine niedrige Position ermöglicht, so dass die Zähne des Dämpfungsritzels (39) von der Zahnstange (40) gelöst werden, einnehmen zu können.

12. Sitzanordnung nach Anspruch 9 oder 11, **dadurch gekennzeichnet, dass** sie eine Steuervorrichtung (45), insbesondere mit Kabeln, umfasst, die eine Zustandsänderung mindestens eines Verriegelungs- und Entriegelungssystems (33, 42) steuern kann.

13. Sitzanordnung nach einem der Ansprüche 1 bis 12, **dadurch gekennzeichnet, dass** sie ein von Flugpersonal bedienbares Verriegelungssystem (47) für die Tür (23.1) in der verstauten Position umfasst.

14. Sitzanordnung nach einem der Ansprüche 1 bis 13, **dadurch gekennzeichnet, dass** sie ein automatisches Ausfahrsystem (52) für die Tür (23.1) von einer verstauten Position in eine ausgefahrenen Position umfasst.

15. Flugzeug mit einer Sitzanordnung (10) gemäß einem der vorhergehenden Ansprüche.

## Claims

1. A seat arrangement (10), in particular for an aircraft cabin, comprising:
- at least one first column of seats (C1) extending on one side of a circulation aisle (12) comprising seats (11.1) arranged one behind the other alternately with consoles (13.1), a console (13.1) being provided with a foot zone (15) for receiving the feet of a passenger of a corresponding rear seat (11.1) of the first column (C1),
- at least a second column of seats (C2) extending on a side opposite the circulation aisle (12) comprising seats (11.2) arranged one behind the other alternately with consoles (13.2), a console (13.2) being provided with a foot zone (15) for receiving the feet of a passenger of a corresponding rear seat (11.2) of the second column (C2),
- the seats (11.2) of the second column (C2) being arranged in a staggered manner with respect to the seats (11.1) of the first column (C1),
**characterized in that** said arrangement (10) comprises at least one first door (23.1) movable between a stored position and a deployed position in which the first door (23.1) closes off an upper space (24) above a console (13.1) of the first column (C1), said upper space (24) being delimited on the one hand by a shell (21) associated with said console (13.1) and on the other hand by a shell (20) associated with a front seat (11.1),
- a lower space (25), which extends between a front end of the console (13.1) and the shell (20) of the front seat (11.1), being left free,
- the lower space (25) being in communication with the upper space (24) to form an access passage between the aisle and a seat (11.2) of the second column (C2) when the first door (23.1) is in the stored position,
- and **in that** said seat arrangement (10) comprises at least one second door (23.2) movable between a stored position and a deployed position in which the door (23.2) closes off a space extending between a shell (20) of a seat (11.1) and a rear end of a console (13.1) of the first column (C1), said space forming an access passage between the circulation aisle (12) and a seat (11.1) of the first column (C1), when the second door (23.2) is in the stored position,
- the first door (23.1) being smaller than the second door (23.2).

2. The seat arrangement according to claim 1, **characterized in that** the lower space (25) left free has a length (L1) of at least 9 inches (22.86 cm).

3. The seat arrangement according to claim 1 or 2, **characterized in that** the lower space (25) left free has a height (L2) between 25 inches (63.50cm) and 30 inches (76.20cm).

4. The seat arrangement according to any of the claims 1 to 3, **characterized in that** the first door (23.1) and the upper space (24) have a length (L3) between 15 inches (38.10cm) and 20 inches (50.80cm).

5. The seat arrangement according to any of the claims 1 to 4, **characterized in that** the first door (23.1) and the upper space (24) have a height (L4) between 14 inches (35.56cm) and 20 inches (50.80cm).

6. The seat arrangement according to any of the claims 1 to 5, **characterized in that** at one end of a column of seats (C1, C2), a premium space (EP) comprises a bed space and/or an increased seating space and/or a cinema space.

7. The seat arrangement according to any of the claims 1 to 6, **characterized in that** the door (23.1) is arranged between a portion of a shell (21) and a fixed support (28) carrying a guiding slide (31), a rack (40), components of an automatic deployment system (52), as well as components of a system (33) for locking and unlocking the door.

8. The seat arrangement according to any of the claims 1 to 7, **characterized in that** the door (23.1) comprises a carriage (30) mounted so as to be movable in translation along a guiding slide (31) to allow the door (23.1) to move from one position to another.

9. The seat arrangement according to claim 8, **characterized in that** it comprises a system (33) for locking and unlocking the door (23.1) relative to the carriage (30).

10. The seat arrangement according to claim 8 or 9, **characterized in that** the door (23.1) comprises a second carriage (38) provided with a damping pinion (39) for damping a displacement of the door (23.1) for cooperating with a rack (40) .

11. The seat arrangement according to claim 10, **characterized in that** the second carriage (38) comprises a locking and unlocking system (42) able to adopt a locked state in which said system (42) maintains the second carriage (38) in a high position so that the teeth of the damping pinion (39) cooperate with the rack (40), and an unlocked state allowing said second carriage (38) to move towards a low position so that the teeth of the damping pinion (39) are disengaged from the rack (40).

12. The seat arrangement according to claim 9 or 11, **characterized in that** it comprises a control device (45), in particular with cables, capable of controlling a change of state of at least one locking and unlocking system (33, 42).

13. The seat arrangement according to any of the claims 1 to 12, **characterized in that** it comprises a locking system (47) for the door (23.1) in the stored position operable by flight attendants.

14. The seat arrangement according to any of the claims 1 to 13, **characterized in that** it comprises an automatic deployment system (52) for the door (23.1) from a stored position to a deployed position.

15. An aircraft comprising a seat arrangement (10) as defined according to any of the preceding claims.
